# EUROPEAN PATENT SPECIFICATION

(11) **EP 3 521 124 B1**
(45) Date of publication and mention of the grant of the patent: **28.08.2024**
(21) Application number: 17856426.6
(22) Date of filing: 29.09.2017
(51) Int. Cl.: B60W 50/10, B60W 30/00, B60W 40/04, B60W 40/06, G08G 1/16, B60W 50/14, B60W 50/08, B60W 60/00, B60K 35/00

(54) **VEHICLE-MOUNTED DEVICE, CONTROL METHOD, AND PROGRAM**
FAHRZEUGMONTIERTE VORRICHTUNG, STEUERUNGSVERFAHREN UND PROGRAMM
DISPOSITIF MONTÉ SUR VÉHICULE, PROCÉDÉ DE COMMANDE ET PROGRAMME

(30) Priority: 30.09.2016 JP 2016193932
(43) Date of publication of application: 07.08.2019
(73) Proprietor: Pioneer Corporation, Tokyo 113-0021 (JP)
(72) Inventor: GOTODA, Akira, Kawagoe-shi Saitama 350-8555 (JP); KURAHASHI, Makoto, Kawagoe-shi Saitama 350-8555 (JP); NAGATA, Hiroshi, Kawagoe-shi Saitama 350-8555 (JP)
(74) Representative: Vossius & Partner Patentanwälte Rechtsanwälte mbB
(86) International application number: PCT/JP2017/035455
(87) International publication number: WO 2018/062477

(56) References cited:
- WO-A1-2013/008299
- WO-A1-2016/109829
- DE-A1- 102005 047 591
- DE-A1- 102012 002 581
- JP-A- 2002 104 013
- JP-A- 2016 064 773
- US-A1- 2009 287 367
- US-A1- 2016 231 743

## Description

### TECHNICAL FIELD

The present invention relates to an in-vehicle device, a control method, and a program.

### BACKGROUND ART

Patent Document 1 discloses a travel control device that controls travel of a vehicle. The travel control device is configured to alleviate a sense of discomfort and unease that a driver or a passenger feels about autonomous travel control. Specifically, the travel control device includes a unit that decides driving behavior content to be taken by the own vehicle on the basis of outside world recognition information received from an outside world sensor or the like and own vehicle information including a position and a traveling speed of the own vehicle, a unit that specifies a driving behavior factor which becomes a reason for deciding the driving behavior content, and a unit that outputs the driving behavior content and the driving behavior factor.

WO 2016/109829 A relates to systems and methods of operating an autonomous vehicle to perform an autonomous maneuver. One system includes a human machine interface and an electronic controller electrically coupled to the human machine interface. The electronic controller includes an electronic processor configured to detect at least one driving condition and determine the autonomous maneuver based on the at least one driving condition.

DE 10 2005 047 591 A1 discloses a method for relieving the driver when operating a motor vehicle with a large number of driver assistance systems for performing a large number of different driving maneuvers and means for obtaining situation data for describing a current driving situation.

### RELATED DOCUMENT

### PATENT DOCUMENT

[Patent Document 1] Japanese Unexamined Patent Publication No. 2015-199439.

### SUMMARY OF THE INVENTION

### TECHNICAL PROBLEM

By the technique disclosed in the Patent Document 1, a driver of a vehicle may grasp content (driving behavior content) controlled by the autonomous travel control and a cause (driving behavior factor) of the control. However, there is no disclosure on a process after the grasping in the Patent Document 1.

For example, there may be a case where a problem (erroneous detection or the like) with the cause of the control and the control according to the content is unnecessary. Also, there is a case where although there is no problem with the content and cause of the control obtained by a computer, for some reason unrecognizable by the computer the control based on the cause may be unnecessary. For example, there is a case where, detecting plural pedestrians standing in the vicinity of a pedestrian crossing in front (cause), the own vehicle slows down and stops before the pedestrian crossing (control content), but the pedestrians just engage in conversation there and have no intention to cross. In this case, a driver may grasp the situation by communication between the pedestrians and the driver. However, it is difficult for a computer to grasp the situation.

As an example of a process in such a case, switching from autonomous-driving to manual-driving may be considered. However, if switching to manual-driving is required every time such a situation occurs, burden on the driver increases and advantages of autonomous-driving decrease. Also, when a vehicle is a fully autonomous-driving vehicle and a driver does not have driving skills, it is impossible to shift from autonomous-driving to manual-driving.

An example of an object of the present invention is to alleviate a burden on a driver during autonomous travel control.

### SOLUTION TO PROBLEM

The present invention relates to an in-vehicle device, control method and program as defined by the features of the independent claims.

### BRIEF DESCRIPTION OF THE DRAWINGS

The above and other objects, features and advantages of the present invention will be more apparent from the following description of certain preferred embodiments taken in conjunction with the accompanying drawings.
Fig. 1 shows an example of a functional block diagram of an in-vehicle device of the present embodiment.
Fig. 2 shows a block diagram illustrating an example of a hardware configuration of an in-vehicle device of the present embodiment.
Fig. 3 shows a diagram schematically illustrating an example of data processed by the in-vehicle device of the present embodiment.
Fig. 4 shows a diagram schematically illustrating an example of an image output by the in-vehicle device of the present embodiment.
Fig. 5 shows a diagram schematically illustrating an example of an image output by the in-vehicle device of the present embodiment.
Fig. 6 shows a diagram schematically illustrating an example of an image output by the in-vehicle device of the present embodiment.
Fig. 7 shows a flowchart illustrating an example of a process flow of the in-vehicle device of the present embodiment.
Fig. 8 shows a diagram schematically illustrating an example of an image output by the in-vehicle device of the present embodiment.
Fig. 9 shows a diagram schematically illustrating an example of an image output by the in-vehicle device of the present embodiment.
Fig. 10 shows a diagram schematically illustrating an example of date processed by the in-vehicle device of the present embodiment.
Fig. 11 shows a flowchart illustrating an example of a process flow of the in-vehicle device of the present embodiment.
Fig. 12 shows a diagram schematically illustrating an example of data processed by the in-vehicle device of the present embodiment.
Fig. 13 shows a flowchart illustrating an example of a process flow of the in-vehicle device of the present embodiment.

### DESCRIPTION OF EMBODIMENTS

Hereinafter, an embodiment of the present invention will be described with reference to drawings. In all the drawings, the same components are denoted by the same reference numerals, and the description thereof will not be repeated as deemed appropriate.

First, an outline of the present embodiment will be described. An in-vehicle device of the present embodiment monitors a state of an object (example: a pedestrian, a forward vehicle, and the like) on the basis of an output of a sensor mounted in the own vehicle. Then, the in-vehicle device of the present embodiment causes the own vehicle to execute a process (example slowdown, stop, reverse, lane change, speed-up, and course change) in accordance with the state of the object.

Also, the in-vehicle device of the present embodiment causes an output device to output cause information indicating at least one of the object or the state which is the cause of the process . Further, the in-vehicle device of the present embodiment receives an input for changing the process due to the cause indicated by the cause information. For example, the device receives an input for cancelling the process due to the cause or an input for changing the recognition result of the object or the state thereof which is the cause of the process. Then, the in-vehicle device of the present embodiment controls the own vehicle according to the input.

An example will be described to deepen the understanding of the outline of the present embodiment. For example, when detecting one or plural pedestrians standing in the vicinity of a pedestrian crossing in front, the in-vehicle device of the present embodiment causes the own vehicle to slow down and stop before the pedestrian crossing accordingly. Then, the in-vehicle device of the present embodiment notifies "the pedestrians", "that the pedestrians are standing in the vicinity of the pedestrian crossing", "that pedestrian is standing in the vicinity of the pedestrian crossing", or the like as a cause of "slowdown and stop" being executed. From the notification, a driver can grasp the cause of "slowdown and stop" being executed by the own vehicle.

Here, it is assumed that, through the communication between the pedestrians and the driver or the like, the driver learns that the pedestrians are just engaging in a conversation and have no intention to cross.

In this case, the driver can perform an input for changing the process (slowdown and stop) due to the cause that is notified, described above. For example, the driver can perform an input for cancelling the process due to the cause, an input for changing the recognition result (example: pedestrian and state thereof) related to the cause, or the like. Then, the in-vehicle device executes a process in accordance with the input. For example, when the cause of the process (slowdown and stop) is gone due to cancellation of the process (slowdown and stop) or change of the recognition result, the execution of the process (slowdown and stop) is cancelled. Then, the in-vehicle device controls the own vehicle on the basis of the state after the cancellation. For example, the in-vehicle device starts or accelerates the own vehicle.

In this way, under the situation described above, the in-vehicle device of the present embodiment allows the operation of the own vehicle by the autonomous travel control to be continued by simply performing a predetermined input without switching to manual-driving. As a result, the burden on the driver can be alleviated.

Next, the configuration of the in-vehicle device of the present embodiment will be described in detail.

The in-vehicle device is a device that is mounted in a vehicle and controls the own vehicle. The in-vehicle device is an electronic control unit (ECU), for example. The "own vehicle" described in the following means a vehicle controlled by the in-vehicle device.

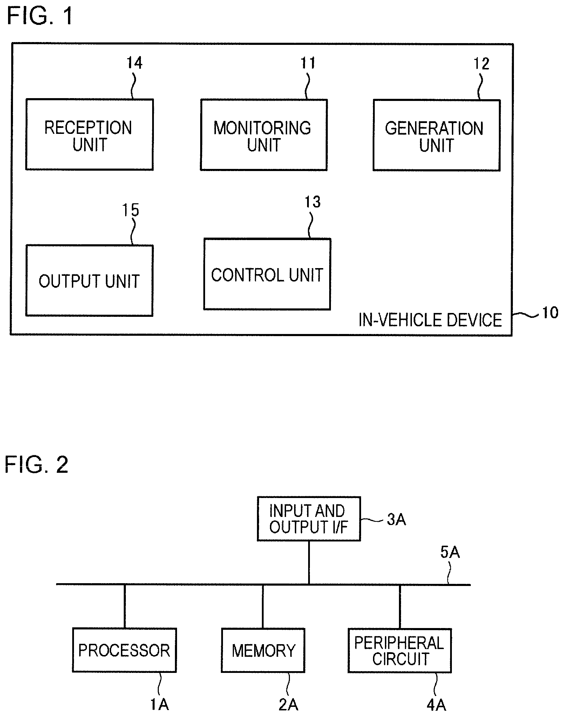

Fig. 1 shows an example of a functional block diagram of the in-vehicle device 10 of the present embodiment. As shown in the figure, the in-vehicle device 10 includes a monitoring unit 11, a generation unit 12, a control unit 13, a reception unit 14, and an output unit 15.

First, an example of the hardware configuration of the in-vehicle device 10 that implements these functional units will be described. Each functional unit is configured with any combination of hardware and software of any computer, with a focus on a central processing unit (CPU), a memory, a program loaded on the memory, a storage unit such as a hard disc storing the program (in addition to a program stored in advance in the stage of shipment of the device, a program downloaded from a storage medium such as a compact disc (CD), a server on the internet, or the like can be stored), and an interface for network connection. Those skilled in the art will understand that there are various modification examples in the implementation method and device.

Fig. 2 shows a block diagram illustrating a hardware configuration of the in-vehicle device 10 of the present embodiment. As shown in Fig. 2, the in-vehicle device 10 includes a processor 1A, a memory 2A, an input and output interface 3A, a peripheral circuit 4A, and a bus 5A. The peripheral circuit 4A includes various modules. It should be noted that the peripheral circuit 4A may not be included.

The bus 5A is a data transmission path through which the processor 1A, the memory 2A, the peripheral circuit 4A and the input and output interface 3A transmit and receive data to and from each other. The processor 1A is an arithmetic processing device such as a CPU or a graphics processing unit (GPU), for example. The memory 2A is a memory such as a random access memory (RAM), a read only memory (ROM), or the like. The input and output interface 3A includes an interface to obtain information from an input device (example: a keyboard, a mouse, or microphone, or the like), an external device, an external server, an external sensor, or the like and an interface to output information to an output device (example: a display, a speaker, a printer, a mailer, or the like), an external device, an external server, or the like. The processor 1A can issue a command to each module and perform calculation based on the calculation results.

Next, the function of each functional unit shown in Fig. 1 will be described in detail.

The monitoring unit 11 monitors the state of an object on the basis of an output of a sensor mounted in the own vehicle. The monitoring unit 11 obtains an output from a sensor, for example, a camera (example: camera capturing the outside surroundings of the own vehicle), LiDAR (laser radar), radar, and the like, that collects information on the external environment of the own vehicle. Also, the monitoring unit 11 may obtain information collected by a sensor installed on the road, by road-to-vehicle communication.

Then, the monitoring unit 11 analyzes the output of the sensor and recognizes the object and the state of the object. Using the feature amount of the appearance of each of plural objects held in advance, the monitoring unit 11 may extract an object from the image captured by the camera. The object is a body that affects the control of the own vehicle, and the example thereof includes, but is not limited to, a pedestrian, another vehicle, a forward vehicle, an oncoming vehicle, a bicycle, a falling object, a traffic light, a road sign, a pedestrian crossing, a landmark, and the like.

The, the monitoring unit 11 recognizes the state of each extracted object. For example, with plural states being prepared in advance for each object, the monitoring unit 11 may determine in what state the extracted object is. The state of the object can be determined on the basis of the circumstantial situation of the object, the situation of the object itself, or the like.

The example of the state when the object is a pedestrian includes, but is not limited to, "about to cross pedestrian crossing in front", "in the middle of crossing pedestrian crossing in front", "finished crossing pedestrian crossing in front", "in the middle of walking on sidewalk", "others", and the like. The monitoring unit 11 can determine the state of a pedestrian on the basis of the circumstantial situation of the pedestrian (example: whether or not a pedestrian crossing is present), the situation of the pedestrian himself (example: whether or not the pedestrian is facing a pedestrian crossing, whether or not the pedestrian is moving toward a pedestrian crossing, where the pedestrian is walking, or the like), and the like.

Also, the example of the state when the object is a forward vehicle includes, but is not limited to, "traveling", "temporarily stopped", "parked", "in the middle of slowdown", "others", and the like. The monitoring unit 11 can determine the state of the target vehicle on the basis of the circumstantial situation of the target vehicle (example: the traffic light in front is red, and a pedestrian is crossing in front), the situation of the target vehicle itself (example: whether or not the vehicle has stopped, whether or not the brake light is on, whether or not the engine is running), and the like.

Also, the monitoring unit 11 can identify the position in an image (position within the frame) for each extracted object. Further, the monitoring unit 11 can identify the relative position of the extracted object with respect to the own vehicle (position of LiDAR and radar) on the basis of the output of LiDAR, radar, or the like.

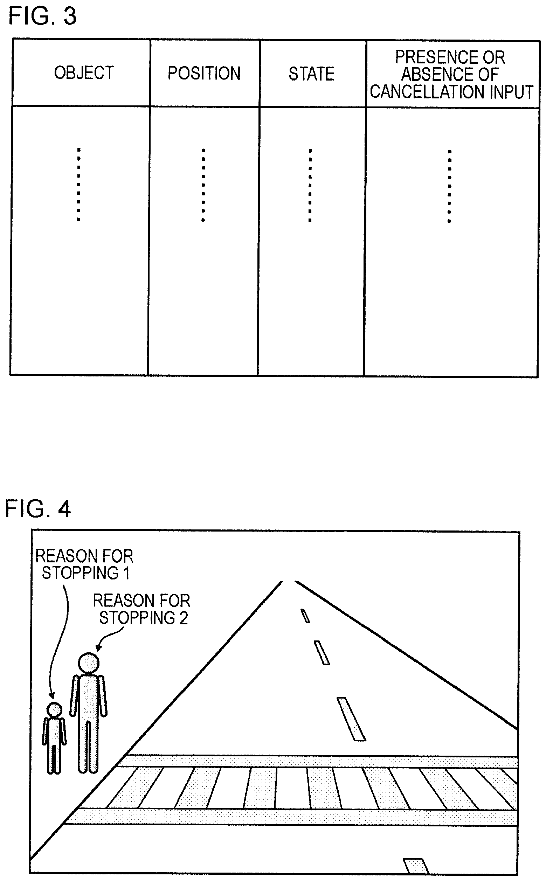

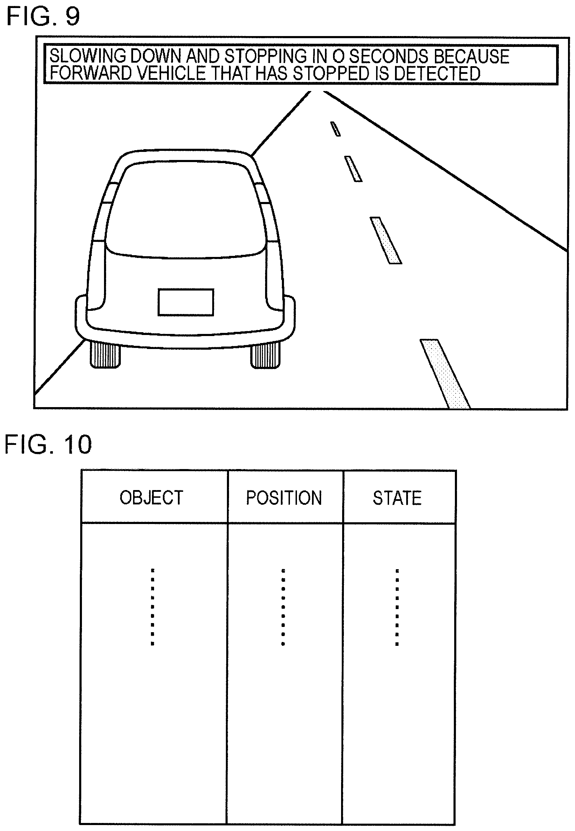

The monitoring unit 11 can register the result of the process as described above. Figs. 3 and 10 schematically show examples of content to be registered. In the example shown in Fig. 3, the kind of the extracted object, the position thereof, the state thereof, and presence or absence of cancellation input are associated with each other. In the example shown in Fig. 10, the kind of the extracted object, the position thereof, the state thereof are associated with each other.

In the column of the object, the kind of each of plural extracted objects is recorded. A pedestrian, a forward vehicle, a bicycle, and the like are recorded, for example. In the column of the position, the position of each of plural extracted objects, for example, the position in the image captured by the camera, the relative position with respect to the own vehicle detected by LiDAR, radar, or the like is recorded. In the column of the state, the states recognized by the above process are recorded. For example, being about to cross a pedestrian crossing in front, crossing a pedestrian crossing in front, and the like are recorded. In the column of the presence or absence of cancellation input, the information indicating whether or not the reception unit 14, to be described below, has received a cancellation input is recorded.

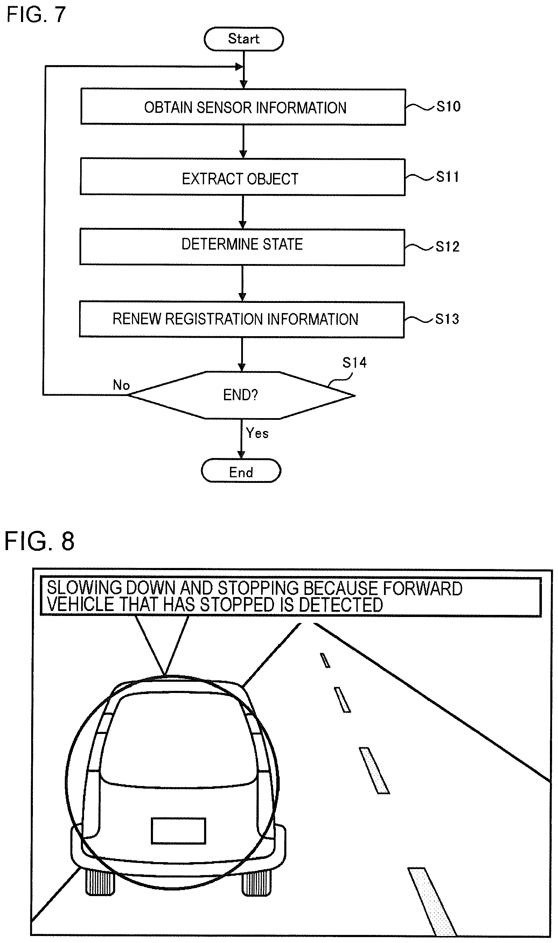

Here, an example of a process in which the monitoring unit 11 registers and updates the registration information of Figs. 3 and 10 will be described with reference to the flowchart of Fig. 7. It should be noted that the process to be described is no more than an example, but is not limited thereto.

First, the monitoring unit 11 obtains an image (sensor information) of a frame to be processed among moving images captured by a camera (S10).

Then, the monitoring unit 11 recognizes an object photographed in an image of a frame to be processed (image captured by a camera) (S11) . Thereafter, the monitoring unit 11 determines whether or not each of the recognized objects is the same object as an object recognized in an image of a previous frame (example: any object registered in the registration information (example: information in Figs. 3 and 10) at that time) . The determination can be implemented by any conventional technique.

When the recognized object is not the same object as the object recognized in an image of the previous frame, the monitoring unit 11 issues new identification information (example: serial number) and associates the identification information with the object recognized in the image of the frame to be processed. On the other hand, when the recognized object is the same object as the object recognized in an image of the previous frame, the monitoring unit 11 associates the identification information of the object already issued with the object recognized in the image of the frame to be processed.

Then, the monitoring unit 11 associates the identification information of the object extracted from the image of the frame to be processed with the position in the image of the object.

Also, the monitoring unit 11 determines the state of each object extracted from the image of the frame to be processed (S12). Then, the monitoring unit 11 associates the recognition result of the state with the identification information of the object recognized in the image of the frame to be processed.

The monitoring unit 11 updates the registration information (example: information in Figs. 3 and 10) on the basis of the recognition result obtained from the image of the frame to be processed (S13) .

When the object recognized in the image of the frame to be processed is not the same object as the object recognized in the image of the previous frame, the monitoring unit 11 newly registers the identification information, the position in the image, and the state of the object recognized in the image of the frame to be processed in the registration information (example: information in Figs. 3 and 10) .

On the other hand, when the object recognized in the image of the frame to be processed is the same object as the object recognized in the image of the previous frame, the monitoring unit 11 updates the information of the object registered in the registration information (example: information in Figs. 3 and 10) on the basis of the identification information, the position in the image and the determination result of the state of the object recognized in the image of the frame to be processed.

Also, the monitoring unit 11 can delete the information satisfying a predetermined condition from the registration information (example: information in Figs. 3 and 10). For example, the monitoring unit 11 may delete the information on an object, among the objects registered in the registration information (example: information in Figs. 3 and 10), that did not match the object recognized in the image of the frame to be processed, that is, the object that was not recognized in the image of the frame to be processed from the registration information (example: information in Figs. 3 and 10) .

The monitoring unit 11 repeats the process described above, for example.

It should be noted that the above process is no more than an example, and another process may be employed as long as the same result can be realized. For example, in the process in S11, the object photographed in an image of the previous frame may be recognized in the image of the frame to be processed by the use of an object tracking function widely known in image processing. Also, a new object not extracted in the previous frame may be recognized in the image of the frame to be processed by the use of the feature amount of the appearance of the object registered in advance.

Back to the Fig.1, while the own vehicle is executing a predetermined process (example: slowdown, stop, reverse, and lane change), the control unit 13 causes an output device to output the cause information indicating at least one of the object or the state which is the cause of the process.

On the basis of the registration information (example:
information in Figs. 3 and 10), the control unit 13 can perceive the object and the state which is the cause of the process and output the cause information indicating the content thereof. For example, in the case of the registration information shown in Fig. 3, the control unit 13 identifies an object in which the column of the state indicates a state of causing the own vehicle to execute a predetermined process (example: slowdown, stop, reverse, and lane change) and the column of the presence or absence of cancellation input indicates not receiving a cancellation input. Then, the identified object and the state of the object are perceived as a cause of the process. On the other hand, in the case of the registration information shown in Fig. 10, the control unit 13 identifies an object in which the column of the state indicates a state of causing the own vehicle to execute a predetermined process (example: slowdown, stop, reverse, and lane change). Then, the identified object and the state of the object are perceived as a cause of the process.

Each of plural states of the objects and a process executed each time when each state is detected may be associated with each other in advance. On the basis of such association information, from among the information registered in the registration information (example: information in Figs 3 and 10), the control unit 13 may perceive the object and the state which caused each process.

For example, a process such as "slowdown", "stop", or the like may be decided corresponding to "(object) pedestrian: (state) about to cross pedestrian crossing in front", and "(object) pedestrian: (state) in the middle of crossing pedestrian crossing in front".

Also, a process such as "slowdown", "stop", "lane change", " following forward vehicle", or the like may be decided corresponding to "(object) forward vehicle: (state) temporarily stopped". Also, a process such as "slowdown", "stop", "lane change", "reverse", or the like may be decided corresponding to "(object) forward vehicle: (state) parked". Also, a process such as "slowdown", "stop", "lane change", "reverse", or the like may be decided corresponding to "(object) obstacle obstructing driving: (state) stopped".

The example of the output device includes, but is not limited to, a display device installed in a vehicle, a head-up display device, a head mount display device, a projection device, a smartphone, a tablet, a speaker, and the like. The in-vehicle device 10 may include the output device. Also, the output device may be configured to be separate from the in-vehicle device 10 physically and/or logically. When the output device and the in-vehicle device 10 are configured to be separate physically and/or logically, the output device and the in-vehicle device 10 are configured to be capable of communicating with each other by wire and/or radio.

Fig. 4 shows an example of an output by the control unit 13. In the illustrated example, the control unit 13 causes an image to be output in which the cause information is superimposed on a real-time image captured by a camera. In the figure, "reason for stopping 1" and "reason for stopping 2" shown in association with the two pedestrians positioned on the left side are the cause information. The display position in the image of the cause information is decided on the basis of the position (refer to Fig. 3) in the image of the two pedestrians (objects).

According to the image shown in Fig. 4, a driver can perceive that the own vehicle slows down and stops because of the presence of the two pedestrians positioned in the vicinity of a pedestrian crossing.

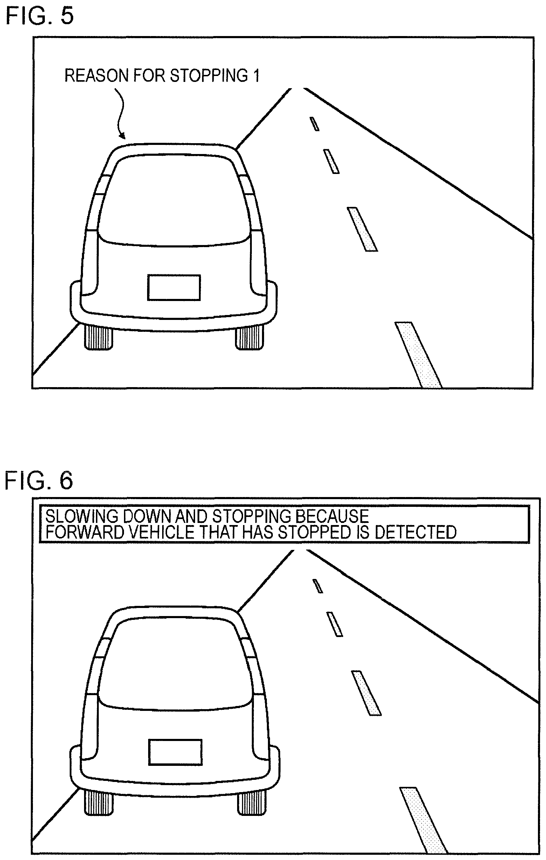

Fig. 5 shows another example of an output by the control unit 13. In the illustrated example, the control unit 13 causes an image to be output in which the cause information is superimposed on a real-time image captured by a camera. In the figure, "reason for stopping 1" shown in association with a vehicle position in front of the own vehicle is the cause information. The forward vehicle has stopped on a side of the road. The display position in the image of the cause information is decided on the basis of the position (refer to Figs. 3 and 10) in the image of the forward vehicle (object).

According to the image shown in Fig. 5, a driver can perceive that the own vehicle slows down and stops because of the presence of a forward vehicle that is positioned in the same lane as the own vehicle and has stopped.

As another example of an output, as shown in Fig. 6, the control unit 13 may cause the output device to output text information such as "slowing down and stopping because forward vehicle that has stopped is detected" or the like. The sentence may be output through a speaker. In this case, as shown in Fig. 8, a display of associating the text information with the object which caused the process may be performed. Also, when plural causes of a process are present (not shown), the text information corresponding to each of plural causes may be output on the output device.

The control unit 13 may cause the above information to be output before the vehicle executes a process due to the cause. In this case, as shown in Fig. 9, the text information of "slowing down and stopping in o seconds because stopping forward vehicle is detected" may be output, notifying the process in advance. In this way, a driver or the like can get prepared in heart. Also, by receiving an input for changing the process due to the cause on the basis of such advance notification information, it is possible to avoid executing an unnecessary process (example: stop, slow down, or the like). Also, in this case, as shown in Fig. 8, a display may be performed to associate the text information with the object which caused the process.

Also, when a head-up display device is used, the cause information may be displayed at a predetermined position of the windshield of the own vehicle. That is, it is possible to display the cause information corresponding to each object at the position (example: intersection point of a straight line connecting the eye position of the driver and the position of the object (real) and the windshield) on the windshield corresponding to each object (real) seen through the windshield from the driver's viewpoint. A means of implementation of such a display can be realized on the basis of the related art.

Back to Fig. 1, the reception unit 14 receives an input for changing the process due to a cause indicated in the cause information output by the control unit 13. For example, the reception unit 14 receives an input for cancelling the process due to the cause, an input for changing the object which is the cause, the state thereof, or the like. The reception unit 14 can receive the input described above through any input device such as a touch panel display device, an operation button, a camera, a microphone, a visual line detection device, or the like.

For example, the images shown in Figs. 4 to 6 and Figs. 8 and 9 may be output through a touch panel display device. Then, through the touch panel display device, the reception unit 14 may receive an input for touching the characters such as "reason for stopping 1", "reason for stopping 2", or the like shown in Figs. 4 and 5 or the objects corresponding the characters. Then, the reception unit 14 may receive the input as an input for cancelling the execution of the process due to the touched cause. The registration information shown in Fig. 3 is updated in accordance with the input, for example. That is, corresponding to the touched cause (predetermined state of predetermined object), cancellation is registered in the column of presence or absence of the cancellation input.

Also, in response to an input for touching the characters such as "reason for stopping 1", "reason for stopping 2", or the like or the objects corresponding to the characters, the control unit 13 may cause the output device to output a notice such as "Cancel execution of process (slowdown and stop) due to the cause? Yes or No". Then, the reception unit 14 may receive an input of "Yes" to the notice as an input for cancelling the execution of the process due to the cause. In accordance with the input, the registration information shown in Fig. 3 is updated, for example. That is, corresponding to the touched cause (predetermined state of predetermined object), cancellation is registered in the column of the presence or absence of cancellation input.

Also, in accordance with an input for touching the characters such as "reason for stopping 1", "reason for stopping 2", or the like or the objects corresponding to the characters, the control unit 13 may cause the output device to output a notice such as "Change recognition result? Yes or No" or the like. Then, when the reception unit 14 receives "Yes" input, the control unit 13 may cause the output device to output information for changing the recognition result.

For example, the control unit 13 may cause the current recognition result to be output. The recognition result may include the recognition result of the object and the recognition result of the state. Specifically, the example includes, but is not limited to, "pedestrian about to cross", "pedestrian in the middle of crossing", "temporarily stopped vehicle", and the like.

Also, the control unit 13 may cause a list of probable results for a post-change recognition result to be output. For example, when the current recognition result is "pedestrian about to cross", "pedestrian in the middle of crossing", or the like, "waiting pedestrian", "traffic controller", or the like may be output in the list of probable results for a post-change recognition result. Also, when the current recognition result is "temporarily stopped vehicle", "parked vehicle", "broken-down vehicle", or the like may be output in a list of probable results for a post-change recognition result.

Then, the reception unit 14 receives the post-change recognition result from among the output list of probable results. In accordance with the input, the registration information shown in Figs. 3 and 10 is updated, for example. That is, corresponding to the touched cause (predetermined state of predetermined object), the information in the column of the object and the information in the column of state are updated.

As another example, the control unit 13 may cause the output device to output a notice such as "which recognition result to change, object or state?" or the like while outputting the current recognition result. Then, when the reception unit 14 receives an input of the "object", a list of probable results for a post-change object may be output. For example, when the current recognition result is "pedestrian", "bronze statute", "doll", "traffic controller", or the like may be output in the list of probable results for a post-change object. Also, when the current recognition result is "obstacle obstructing driving", "obstacle that can be run over" or the like may be output in a list of probable results for a post-change object. On the other hand, when the reception unit 14 receives the input of "state*"*, a list of probable results for a post-change object may be output. For example, when the current recognition result is "about to cross", "waiting" or the like may be output in a list of probable results for a post-change object.

Then the reception unit 14 receives the post-change recognition result from among a list of the output probable results. In accordance with the input, the registration information shown in Figs. 3 and 10 is updated, for example. That is, corresponding to the touched cause (predetermined state of predetermined object), the information in the column of the object and the information in the column of the state are updated.

Also, in the case of the image shown in Fig. 6, through the touch panel display device, the reception unit 14 receives an input for touching a notice of "slowing down and stopping because stopping forward vehicle is detected" or the area corresponding thereto (example: area in which a quadrilateral surrounding the characters is displayed). Then, the reception unit 14 may receive the input as an input for cancelling the execution of the process due to the touched cause. Also, in response to the input, the reception unit 14 may cause the output device to output a notice of "cancel execution of process (slowdown and stop) due to the cause? Yes or No" or the like. Then the input of "Yes" to the notice may be received as an input for cancelling the execution of the process due to the cause. Also, the reception unit 14 may receive an input for changing the recognition result in the same manner as described above.

Also, by receiving an input for selecting a predetermined area on an image with an operation button and a cursor displayed on the image, the reception unit 14 may receive the same input as the example in which the touch panel display device is used.

Also, when the head-up display device is used and the cause information is displayed on a windshield, by detecting predetermined motion (motion of touching cause information displayed on windshield or the like) of a driver with a camera, the reception unit 14 may receive the input of the change described above.

An abstracted map may be displayed on the touch panel display device, icons of the own vehicle position and a detected object (example: person, other vehicles, or the like) may be arranged thereon, and thus a reason for stopping may be shown thereon. Then, by the operation of touching the icon or the like, the reception unit 14 may receive the input for changing the process due to the cause.

Also, the reception unit 14 may obtain the voice of the person on board using a microphone, detect a predetermined voice (that is, specifies the content of what the person says) by analyzing the obtained voice, and receive the input of the change described above. For example, "cancel slowdown" or "pedestrian has no intention to cross" is detected.

Also, detecting the visual line of a person on board with the visual line detection device, the reception unit 14 may select an object of which the recognition result is to be changed. In this case, the object at the end of the visual line may be selected as an object to change the recognition result of. For the selection of the change, another device may be used or a blink detection result of the visual line detection device may be used.

As shown in Figs. 4 to 6 and Figs. 8 and 9, the control unit 13 may cause the output device to output one or plural pieces of cause information for causing the execution of the process (example: slowdown and stop). When there are plural causes for execution of the process (example: slowdown and stop), all the cause information can be output on the output device.

Then, corresponding to one or each of plural pieces of cause information, the reception unit 14 can receive input for changing the process (example: slowdown and stop) caused by each. That is, the reception unit 14 can receive the input for changing the process (example: slowdown and stop) due to each of plural causes individually.

Back to Fig. 1, the generation unit 12 generates process information for causing the own vehicle to execute a process in accordance with the state of the object. Also, on the basis of the reception result of the reception unit 14, the generation unit 12 can generate process information in which the process is changed. The output unit 15 outputs process information generated by the generation unit 12 to the vehicle control device that controls the vehicle.

On the basis of the registration information (example: information of Figs. 3 and 10) and a variety of other information, the generation unit 12 decides control content of the own vehicle. Then, the generation unit 12 generates process information for controlling the own vehicle with the decided content. In accordance with the process information, factors such as steering, braking, and accelerating of the own vehicle are controlled, for example.

A variety of other information described above includes, but is not limited to, information indicating the position of the own vehicle, map information, route information indicating a route to a destination, external world information indicating the situation of the outside and surrounding of the own vehicle detected on the basis of a camera, LiDAR, radar, and the like, and sensor information (example: speed and the like) from various sensors mounted in the own vehicle.

For example, when at least one object that is in a state of causing the own vehicle to execute a predetermined process is registered in the registration information (example: information of Figs. 3 and 10), the generation unit 12 may decide to cause the own vehicle to execute the process.

"Object in a state of causing own vehicle to execute a predetermined process" is, for example, in registration information of Fig.3, an object in which the column of state indicates a state of causing the own vehicle to execute a predetermined process (example: slowdown, stop, reverse, and lane change) and the column of presence or absence of cancellation input indicates that a cancellation input is not received. Also, for example, in the registration information of Fig. 10, it is an object in which the column of state indicates a state of causing the own vehicle to execute a predetermined process (example: slowdown, stop, reverse, and lane change).

As described above, each of plural states of the object and the process executed when each is detected may be associated with each other in advance. Then, on the basis of such association information, the generation unit 12 may identify the cause (state of object) causing the execution of a predetermined process (example: slowdown and stop) from among the information registered in the registration information (example: information of Figs. 3 and 10).

When at least one object in the state of causing the own vehicle to execute slowdown and stop is registered, for example, the generation unit 12 generates the process information for causing the own vehicle to slow down and stop. Then, when the reception unit 14 received an input, and thus, the cause of slowdown and stop of the own vehicle is gone, the generation unit 12 stops the execution of slowdown and stop of the own vehicle. In accordance with this, the generation unit 12 generates the process information for starting and accelerating the own vehicle.

As described above, plural processes for a pair of an object and a state are sometimes decided like processes such as "slowdown", "stop*"*, "lane change", "following forward vehicle", and the like corresponding to "(object) forward vehicle: (state) temporarily stopped". In this case, on the basis of the state (example: traveling or stopped) of the own vehicle, the circumstantial state (whether or not there is a lane to change to and whether or not it is possible to change to the other lane) around the own vehicle, and the like, for example, the control unit 13 may decide which process to execute.

Even when the reception unit 14 receives an input, the generation unit 12 causes the own vehicle to continue the execution of slowdown and stop in a case where another cause (due to a predetermined state of another object) of slowdown and stop of the own vehicle remains.

Here, a modification example of the present embodiment will be described.

After the reception unit 14 receives an input for cancelling the execution of a predetermined process (first process) caused by the state of the object (first object), the monitoring unit 11 may monitor the object (first object) using the output of the sensor thereafter and detect a predetermined motion performed by the object (first object). Then, in accordance with detection of the predetermined motion, the monitoring unit 11 cancels "cancellation of execution of the predetermined process (first process)". For example, in accordance with the detection, the monitoring unit 11 changes the content in the column of the presence or absence of cancellation input in the registration information (example: Fig. 3) corresponding to the object (first object) into the content indicating that the cancellation input is not received.

Also, after the input for changing the recognition result is received by the reception unit 14, the monitoring unit 11 may monitor the object (first object) using the output of the sensor thereafter and detect a predetermined motion performed by the object (first object) . Then, in accordance with the detection of the predetermined motion, the monitoring unit 11 may change the recognition result that has been changed by the reception executed by the reception unit 14 into the recognition result that is newly recognized by the monitoring unit 11. In accordance with this, the content (example: column of object and column of state) of the registration information (example: information of Figs. 3 and 10) may be updated.

The predetermined motion to be detected may be determined in advance for each object or for each state of the obj ect. For example, when the object is a pedestrian, a movement may be taken as a predetermined motion. Also, when the object is a vehicle, start, lighting of a blinker, extinction of hazard lights, and the like may be taken as predetermined motions. Also, when the object is a pedestrian standing in the vicinity of a pedestrian crossing, a movement toward the pedestrian crossing may be taken as a predetermined motion. It should be noted that the illustration here is no more than an example, and the present invention is not limited thereto.

On the basis of the post-update registration information (example: information of Figs. 3 and 10), the generation unit 12 can control the own vehicle. In the case of the above example in which the execution of the first process caused by the state of the first object is cancelled (first cancellation) and thereafter the first cancellation is cancelled, the generation unit 12 processes the state of the first object as the cause of the first process before the first cancellation, does not process the state of the first object as the cause of the first process after the first cancellation, and processes the state of the first object as the cause of the first process again after the first cancellation is cancelled.

Here, other specific examples will be described. It should be noted that the specific examples are no more than examples, and the present invention is not limited thereto.

### [Specific Example 1]

For example, suppose the monitoring unit 11 detects a parked vehicle in front while the own vehicle is traveling on a narrow alley. Then, on the basis of the detection result and the circumstantial state (example: width of forward vehicle, width of the alley, width of vacant space, and the like) of the own vehicle, and the like, the generation unit 12 decides to reverse and advance on another road (that is, determines that it is impossible to steer clear of the forward vehicle and move forward). In such a case, the control unit 13 causes the information to that effect to be output. That is, the control unit 13 causes the information indicating the reverse and advance on another road because of the presence of a vehicle parked in front to be output.

Here, suppose that, finding the driver of the vehicle parked in front has returned, the driver of the own vehicle determines the forward vehicle can move soon. Then, the driver of the own vehicle performs input for changing the process (reverse) due to the displayed cause (parked vehicle in front) . For example, the driver of the own vehicle performs input for changing the recognition result of the state of the forward vehicle from "parked" to "temporarily stopped". Then, the generation unit 12 again decides a process to cause the own vehicle to execute on the basis of the post-update content. For example, along with the change of the recognition result from "parked" to "temporarily stopped", the process may be changed from "reverse" to "following forward vehicle".

### [Specific Example 2]

For example, suppose that the monitoring unit 11 detects an obstacle that has stopped in front and obstructs the driving while the own vehicle is traveling. Then, on the basis of the detection result and the circumstantial state (example: whether or not there is a lane to change to and whether or not it is possible to change to the other lane) of the own vehicle, the generation unit 12 decides a lane change. In such a case, the control unit 13 causes the information to that effect to be output before the lane change. That is, an advance notification for a lane change in o seconds from now is output because of the presence of an obstacle obstructing the driving in front.

Here, suppose the driver of the own vehicle determines that the obstacle that is determined to obstruct driving in front is an obstacle that can be run over. Then, the driver of the own vehicle performs input for changing the process (lane change) due to the displayed cause (obstacle stopped in front and obstructing driving). For example, an input or the like is performed to change the recognition result of "obstacle obstructing driving" to "obstacle that can be run over". Then, on the basis of the post-update content, the generation unit 12 again decides the process to cause the own vehicle to execute. For example, along with a change of the recognition result of the object from "obstacle obstructing driving" to "obstacle that can be run over", "lane change" may be cancelled.

### [Specific Example 3]

For example, suppose that the monitoring unit 11 detects a forward vehicle that travels at a low speed while the own vehicle is traveling on a road having two or more lanes in each direction. Then, on the basis of the detection result and the circumstantial state (example: whether or not there is a lane to change to and whether or not it is possible to change to the other lane) of the own vehicle, the generation unit 12 decides a lane change. In such a case, the control unit 13 causes the information to that effect to be output before the lane change. That is, an advance notification for a lane change in o seconds from now is output because of the presence of a vehicle traveling at a low speed in front.

Here, suppose that the driver of the own vehicle determines that a lane change is not particularly effective because of a traffic jam. Then, the driver of the own vehicle performs an input for changing the process (lane change) due to the displayed cause (vehicle traveling at a low speed in front). For example, an input for cancelling the lane change due to the cause is performed. Then, on the basis of the input content, the generation unit 12 decides the process to cause the own vehicle to execute. For example, "lane change" is stopped and another process such as "following forward vehicle" may be decided.

According to the in-vehicle device 10 of the present embodiment described above, output of the cause of the process being executed by the own vehicle can notify the driver of the cause of the process. Then, the input for changing the process due to the notified cause is received, and thus, the autonomous travel control can be continued in accordance with the received content.

According to the in-vehicle device of the present embodiment, when there is a problem (erroneous detection or the like) with the cause of a control and the control according thereto is unnecessary, or even when there is no problem in the content and cause of a control by a computer but the control based on the cause is unnecessary for some reason that cannot be recognized by a computer, the operation of the own vehicle by the autonomous travel control can be continued simply by prompting a predetermined input to be input without switching to the manual-driving. As a result the burden on a driver at the time of autonomous travel control can be alleviated.

Also, according to the in-vehicle device of the present embodiment, when plural control causes are present, it is possible to individually receive inputs for changing the process based on the causes. When it is possible to collectively receive inputs of process changes based on each of plural causes, a human error such as overlooking a cause, buried among plural causes, which should not be changed) may occur. As a result, a trouble likely to lead to an accident may occur. When plural control causes are present, in the present embodiment in which it is possible to individually receive inputs of process changes based on plural causes, such a trouble can be alleviated.

Also, according to the in-vehicle device 10 of the present embodiment, even after a change input is received, it is possible to continue to monitor the object related to the cause. Then, when the object performs a predetermined motion, cancellation (cancellation of execution of predetermined process due to predetermined cause) based on the user input can be cancelled, or a process based on the new recognition result by a computer can be performed.

In this case, for example, even when a driver erroneously performs a change input of a predetermined process (example: slowdown and stop) due to communication error between the driver and another person (example: pedestrian, driver of another vehicle, or the like), it is possible to cause the own vehicle to execute the cancelled process (example: slowdown and stop) in response to the object performing a predetermined motion. As a result, accidents caused by human error of a driver can be prevented. That is, a safe system can be realized.

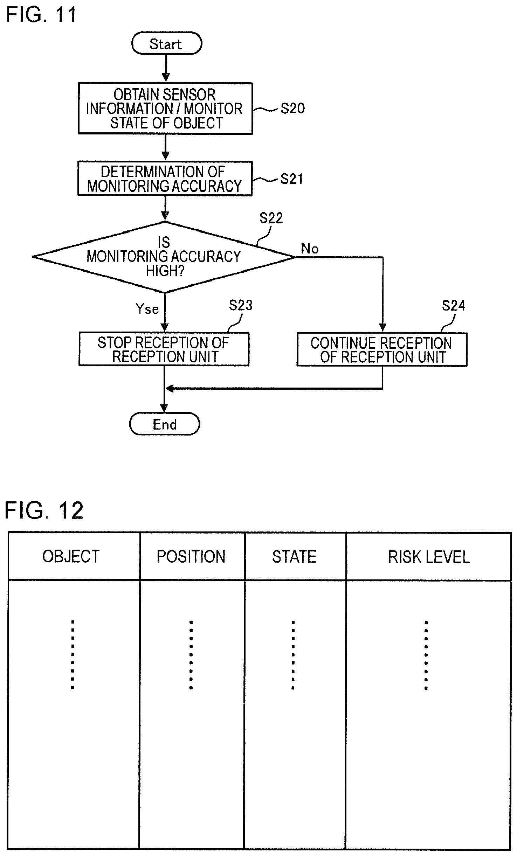

Also, the monitoring unit 11 monitors the state of the object with the output of the sensor and, when a predetermined motion of the object is detected, can stop the reception of an input for cancelling the execution of the predetermined process caused by the state of the object. The flow of the process will be described with reference to Fig. 11.

Specifically, using the output of the sensor, the monitoring unit 11 monitors the state of the object (S20) . Then, a determination unit determines the monitoring accuracy (S21). The determination unit is not shown in Fig. 1, but the in-vehicle device 10 may include a determination unit.

When the state of the object is obvious, for example, like "pedestrian is walking on pedestrian crossing", "pedestrian does not cross pedestrian crossing for sure", "vehicle stopped in front does not start (it is possible to determine by detection of hazard lights or blinker lights from a captured image of the stopped vehicle)", or the like, and the execution of a process to be taken by the own vehicle is obvious, the monitoring accuracy in S21 becomes high. The state of the object to be classified as "monitored with high accuracy" may be registered in advance. Then, on the basis of the registration content, the determination unit may determine whether or not the state of the object recognized by the monitoring unit 11 is "monitored with high accuracy".

If the monitoring accuracy is high (Yes in S22), change of the process execution of the own vehicle is considered to be unnecessary and reception of the reception unit 14 is stopped (S23). If the monitoring accuracy is not high (No in S22), change of the process execution of the own vehicle is considered to be changeable and reception of the reception unit 14 is continued (S24) . As a result, when a vehicle needs to slow down or stop reliably, accident occurrence due to human error of a driver can be suppressed. Also, when a vehicle reliably does not need to slow down or stop, processing in the device can be reduced.

Also, instead of the monitoring accuracy, on the basis of the registration information (refer to Fig. 12) in which the risk level is set for each state of the object in advance, the determination unit may determine the risk level of the monitoring result of the state of the object. The risk level may be represented by numerical value such as, for example, risk levels 1 to 5, or may be represented by other expressions such as large, medium, small, and the like. In this case, when the determination unit determines the risk level of a state of an object is equal to or higher than a predetermined level, change of process execution of the own vehicle is considered to be dangerous and the reception of the reception unit 14 is stopped.

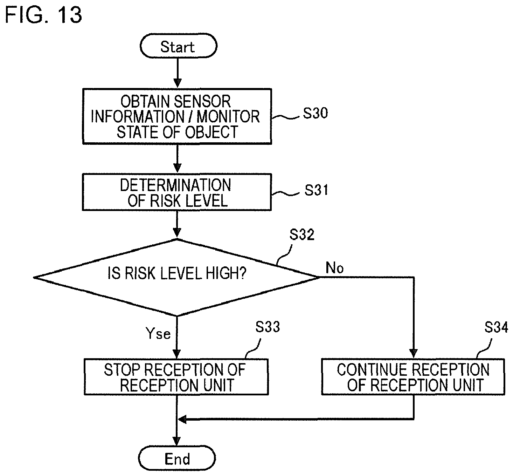

Here, an example of a process flow of the in-vehicle device 10 in the example will be described with reference to the flowchart in Fig. 13. Using the output of the sensor the monitoring unit 11 monitors the state of the object (S30). Then, on the basis of the registration information in which the risk level is set for each state of the object in advance, the determination unit determines the risk level of the state of the object (S32).

For example, the higher the possibility of the state of the object such as "pedestrian is walking on pedestrian crossing" that harm can be inflicted on the driver of the own vehicle or the object when the process execution is cancelled, the higher the risk level is set in the registration information. Then, the lower the possibility of the state of the object such as "there is a possibility that pedestrian will cross pedestrian crossing" that harm can be inflicted on the driver of the own vehicle or the object when the process execution is cancelled, the lower the risk level is set in the registration information. On the basis of the registration information, the determination unit may determine whether or not the state of the object recognized by the monitoring unit 11 is "at a high risk level".

If the risk level of the state of the object is high (Yes in S32), change of the execution of the process of the own vehicle is dangerous and the reception of the reception unit 14 is stopped (S33) . If the risk level of the state of the object is not high (No in S32), change of the execution of the process of the own vehicle is possible, the reception of the reception unit 14 is continued (S34) . As a result, in a situation where it is necessary to stop or slow down reliably, accidents caused by a driver's human error can be reduced. Also, in a situation where it is reliably unnecessary to stop or slow down, processing in the device can be reduced.

Also, the external server may receive from plural vehicles the kind of the object, the state of the object, the vehicle position, and the like when "cancellation of execution of a predetermined process" is cancelled. In this case, by statistical processing, the external server infers the condition under which "cancellation of execution of a predetermined process" is cancelled. The external server updates the map data on the basis of the inferred condition and transmits the inferred condition to the vehicle. When the in-vehicle device of the vehicle to which the condition is transmitted detects an object that meets the condition, the reception unit 14 does not receive the input of "cancellation of execution of a predetermined process (first process)".

Also, display of an area, in which cancellation of the execution of the predetermined process caused by the state of the object can be input, may be controlled (highlighted display, overlapping display of markers, change of color, or the like).

Also, when composed of a driverless vehicle such as a driverless taxi or a driverless bus and a monitoring center that monitors travel of the driverless vehicle, the output unit and the input unit are arranged to the monitoring center and other units are set to the driverless vehicles respectively. In this case, "an input for changing the process due to the cause" is received from the input unit of the monitoring center.

Hitherto, embodiments and examples are described with reference to the drawings, but these are illustrative examples of the present invention and various configurations other than the above can be employed.

## Claims

1. An in-vehicle device (10) comprising:
a monitoring unit (11) that monitors a state of an object on the basis of an output of a sensor mounted in a vehicle;
a generation unit (12) that generates process information for causing the vehicle to execute a process in accordance with the state;
a control unit (13) that causes an output device to output cause information indicating at least one of the object or the state which is a cause of the process; and
a reception unit (14) that receives an input for changing the process due to the cause indicated by the cause information;
wherein, the reception unit (14) receives an input showing a post-change recognition result for changing a recognition result of at least one of the object or the state which is a cause of the process, and
wherein, on the basis of the post-change recognition result, the generation unit (12) generates the process information.

2. The in-vehicle device (10) according to claim 1, further comprising:
an output unit (15) that outputs the process information to a vehicle control device that controls the vehicle.

3. The in-vehicle device (10) according to claim 1 or 2,
wherein the control unit (13) causes the output device to output one or a plurality of pieces of the cause information which is the cause of the process and,
corresponding to one or each of the plurality of pieces of cause information, the reception unit (14) receives an input for changing the process caused by each.

4. The in-vehicle device (10) according to any one of claims 1 to 3,
wherein the process is stopping of a movement of the vehicle,
the control unit (13) causes the output device to output one or a plurality of pieces of the cause information which is the cause of the vehicle stopping, and,
corresponding to one or each of the plurality of cause information, the reception unit (14) receives an input for cancelling stopping of the vehicle caused by each.

5. The in-vehicle device (10) according to any one of claims 1 to 4,
wherein, when an input for cancelling a first process caused by a state of a first object is received by the reception unit (14) and a cause of the first process disappears, the generation unit (12) generates process information for stopping execution of the first process.

6. The in-vehicle device (10) according to claim 5,
wherein, when a predetermined motion of the first object is detected by the monitoring unit (11) after an input for cancelling the first process caused by a first state of the first object is received by the reception unit (14), the generation unit (12) generates process information for causing the vehicle to execute the first process again.

7. The in-vehicle device (10) according to any one of claims 1 to 4,
wherein, even when an input for cancelling a first process caused by a state of a first object is received by the reception unit, in a case where another state of an object as a cause of the first process remains, the generation unit (12) generates process information for continuing the first process.

8. The in-vehicle device (10) according to claim 7,
wherein, when a predetermined motion of the first object is detected by the monitoring unit (11) after the input for cancelling the first process caused by the state of the first object is received by the reception unit (14), the generation unit (12) generates process information for causing the state of the first object to be the cause of the first process again.

9. The in-vehicle device (10) according to any one of claims 1 to 8,
wherein the reception unit (14) receives an input for changing the state of the object determined by the monitoring unit (11) and,
on the basis of the input for changing of the state of the object, the generation unit (12) generates process information in which the process is changed.

10. The in-vehicle device (10) according to claim 1, further comprising:
a determination unit that determines monitoring accuracy of the monitoring unit (11);
wherein the reception unit (14) stops receiving an input for changing the process when the monitoring accuracy is high.

11. A control method which is executed by a computer, the method comprising:
a monitoring step of monitoring a state of an object on the basis of an output of a sensor mounted in a vehicle;
a generation step of generating process information for causing the vehicle to execute a process in accordance with the state;
a control step of causing an output device to output cause information indicating at least one of the object or the state which is the cause of the process; and
a reception step of receiving an input for changing the process due to the cause indicated by the cause information and receiving an input showing a post-change recognition result for changing a recognition result of at least one of the object or the state which is a cause of the process;
wherein in the generation step, on the basis of the post-change recognition result, the process information is generated.

12. A program causing a computer to function as
a monitoring unit (11) that monitors a state of an object on the basis of an output of a sensor mounted in a vehicle;
a generation unit (12) that generates process information for causing the vehicle to execute a process in accordance with the state;
a control unit (13) that causes an output device to output cause information indicating at least one of the object or the state which is a cause of the process; and
a reception unit (14) that receives an input for changing the process due to the cause indicated by the cause information;
wherein, the reception unit (14) receives an input showing a post-change recognition result for changing a recognition result of at least one of the object or the state which is a cause of the process, and
wherein, on the basis of the post-change recognition result, the generation unit (12) generates the process information.

## Patentansprüche

1. Fahrzeuginterne Vorrichtung (10), die aufweist:
eine Überwachungseinheit (11), die einen Zustand eines Objekts auf der Grundlage einer Ausgabe eines in einem Fahrzeug angebrachten Sensors überwacht;
eine Erzeugungseinheit (12), die Prozessinformationen erzeugt, um das Fahrzeug zu veranlassen, einen Prozess gemäß dem Zustand auszuführen;
eine Steuereinheit (13), die eine Ausgabevorrichtung veranlasst, Ursacheninformationen auszugeben, die das Objekt und/oder den Zustand anzeigen, das oder der eine Ursache für den Prozess ist; und
eine Empfangseinheit (14), die eine Eingabe zum Ändern des Prozesses aufgrund der durch die Ursacheninformationen angezeigten Ursache empfängt;
wobei die Empfangseinheit (14) eine Eingabe empfängt, die ein Nach-Änderungs-Erkennungsergebnis zum Ändern eines Erkennungsergebnisses des Objekts und/oder des Zustands zeigt, das oder der eine Ursache des Prozesses ist, und
wobei die Erzeugungseinheit (12) auf der Grundlage des Nach-Änderungs-Erkennungsergebnisses die Prozessinformation erzeugt.

2. Fahrzeuginterne Vorrichtung (10) nach Anspruch 1, die ferner aufweist:
eine Ausgabeeinheit (15), die die Prozessinformation an eine Fahrzeugsteuervorrichtung ausgibt, die das Fahrzeug steuert.

3. Fahrzeuginterne Vorrichtung (10) nach Anspruch 1 oder 2,
wobei die Steuereinheit (13) die Ausgabevorrichtung veranlasst, eine oder mehrere der Ursacheninformationen auszugeben, die die Ursache des Prozesses sind, und,
die Empfangseinheit (14) entsprechend einer oder mehreren der mehreren Ursacheninformationen eine Eingabe zur Änderung des Prozesses empfängt, der durch jede verursacht wird.

4. Fahrzeuginterne Vorrichtung (10) nach einem der Ansprüche 1 bis 3,
wobei der Prozess das Anhalten einer Bewegung des Fahrzeugs ist, die Steuereinheit (13) die Ausgabevorrichtung veranlasst, eine oder mehrere der Ursacheninformationen auszugeben, die die Ursache für das Anhalten des Fahrzeugs sind, und,
die Empfangseinheit (14) entsprechend einer oder jeder der mehreren Ursacheninformationen eine Eingabe zum Abbrechen des Anhaltens des Fahrzeugs empfängt, der durch jede verursacht wird.

5. Fahrzeuginterne Vorrichtung (10) nach einem der Ansprüche 1 bis 4,
wobei, wenn eine Eingabe zum Abbrechen eines ersten Prozesses, der durch einen Zustand eines ersten Objekts verursacht wird, von der Empfangseinheit (14) empfangen wird und eine Ursache des ersten Prozesses verschwindet, die Erzeugungseinheit (12) Prozessinformationen zum Stoppen der Ausführung des ersten Prozesses erzeugt.

6. Fahrzeuginterne Vorrichtung (10) nach Anspruch 5, wobei, wenn eine vorbestimmte Bewegung des ersten Objekts von der Überwachungseinheit (11) erfasst wird, nachdem eine Eingabe zum Abbrechen des ersten Prozesses, die durch einen ersten Zustand des ersten Objekts verursacht wird, von der Empfangseinheit (14) empfangen wird, die Erzeugungseinheit (12) Prozessinformationen erzeugt, um das Fahrzeug zu veranlassen, den ersten Prozess erneut auszuführen.

7. Fahrzeuginterne Vorrichtung (10) nach einem der Ansprüche 1 bis 4,
wobei selbst dann, wenn eine Eingabe zum Abbrechen eines ersten Prozesses, der durch einen Zustand eines ersten Objekts verursacht wird, von der Empfangseinheit empfangen wird, in einem Fall, in dem ein anderer Zustand eines Objekts als Ursache des ersten Prozesses bestehen bleibt, die Erzeugungseinheit (12) Prozessinformationen zum Fortsetzen des ersten Prozesses erzeugt.

8. Fahrzeuginterne Vorrichtung (10) nach Anspruch 7, wobei, wenn eine vorbestimmte Bewegung des ersten Objekts von der Überwachungseinheit (11) erfasst wird, nachdem die Eingabe zum Abbrechen des ersten Prozesses, der durch den Zustand des ersten Objekts verursacht wird, von der Empfangseinheit (14) empfangen wird, die Erzeugungseinheit (12) Prozessinformationen erzeugt, um zu bewirken, dass der Zustand des ersten Objekts wieder die Ursache des ersten Prozesses ist.

9. Fahrzeuginterne Vorrichtung (10) nach einem der Ansprüche 1 bis 8,
wobei die Empfangseinheit (14) eine Eingabe zur Änderung des Zustands des Objekts empfängt, der von der Überwachungseinheit (11) bestimmt wird, und die Erzeugungseinheit (12) auf der Grundlage der Eingabe zur Änderung des Zustands des Objekts Prozessinformationen erzeugt, in denen der Prozess geändert wird.

10. Fahrzeuginterne Vorrichtung (10) nach Anspruch 1, die ferner aufweist:
eine Bestimmungseinheit, die die Überwachungsgenauigkeit der Überwachungseinheit (11) bestimmt;
wobei die Empfangseinheit (14) den Empfang einer Eingabe zum Ändern des Prozesses stoppt, wenn die Überwachungsgenauigkeit hoch ist.

11. Steuerungsverfahren, das von einem Computer ausgeführt wird, wobei das Verfahren aufweist:
einen Überwachungsschritt zum Überwachen eines Zustands eines Objekts auf der Grundlage einer Ausgabe eines in einem Fahrzeug angebrachten Sensors;
einen Erzeugungsschritt zum Erzeugen von Prozessinformationen, um das Fahrzeug zu veranlassen, einen Prozess gemäß dem Zustand auszuführen;
einen Steuerschritt zum Veranlassen einer Ausgabevorrichtung, Ursacheninformationen auszugeben, die das Objekt und/oder den Zustand anzeigen, das oder der die Ursache des Prozesses ist; und
einen Empfangsschritt des Empfangens einer Eingabe zum Ändern des Prozesses aufgrund der Ursache, die durch die Ursacheninformationen angezeigt wird, und des Empfangens einer Eingabe, die ein Nach-Änderungs-Erkennungsergebnis zeigt, zum Ändern eines Erkennungsergebnisses des Objekts und/oder des Zustands, das oder der eine Ursache des Prozesses ist;
wobei im Erzeugungsschritt auf der Grundlage des Nach-Änderungs-Erkennungsergebnisses die Prozessinformationen erzeugt werden.

12. Programm, das einen Computer veranlasst, zu funktionieren als
eine Überwachungseinheit (11), die einen Zustand eines Objekts auf der Grundlage einer Ausgabe eines in einem Fahrzeug angebrachten Sensors überwacht;
eine Erzeugungseinheit (12), die Prozessinformationen erzeugt, um das Fahrzeug zu veranlassen, einen Prozess gemäß dem Zustand auszuführen;
eine Steuereinheit (13), die eine Ausgabevorrichtung veranlasst, Ursacheninformationen auszugeben, die das Objekt und/oder den Zustand anzeigen, das oder der eine Ursache für den Prozess ist; und
eine Empfangseinheit (14), die eine Eingabe zur Änderung des Prozesses aufgrund der durch die Ursacheninformationen angezeigten Ursache empfängt;
wobei die Empfangseinheit (14) eine Eingabe empfängt, die ein Nach-Änderungs-Erkennungsergebnis zum Ändern eines Erkennungsergebnisses des Objekts und/oder des Zustands zeigt, das oder der eine Ursache des Prozesses ist, und
wobei die Erzeugungseinheit (12) auf der Grundlage des Nach-Änderungs-Erkennungsergebnisses die Prozessinformationen erzeugt.

## Revendications

1. Dispositif embarqué (10), comprenant :
une unité de surveillance (11) surveillant l'état d'un objet sur la base d'une sortie d'un capteur monté dans un véhicule ;
une unité de génération (12) générant des informations de processus pour entraîner l'exécution par le véhicule d'un processus en fonction de l'état ;
une unité de commande (13) entraînant l'émission par un dispositif de sortie d'informations de cause indiquant l'objet et/ou l'état à l'origine du processus ; et
une unité de réception (14) recevant une entrée pour modifier le processus en raison de la cause indiquée par les informations de cause ;
où l'unité de réception (14) reçoit une entrée indiquant un résultat de reconnaissance après modification pour modifier un résultat de reconnaissance de l'objet et/ou de l'état à l'origine du processus, et
où l'unité de génération (12) génère les informations de processus sur la base du résultat de reconnaissance après modification.

2. Dispositif embarqué (10) selon la revendication 1, comprenant en outre :
une unité de sortie (15) transmettant les informations de processus à un dispositif de commande du véhicule qui commande le véhicule.

3. Dispositif embarqué (10) selon la revendication 1 ou la revendication 2,
où l'unité de commande (13) entraîne l'émission par le dispositif de sortie d'un élément, ou d'une pluralité d'éléments d'informations de cause, à l'origine du processus et,
en correspondance avec un élément, ou avec chacun des éléments de la pluralité d'informations de cause, l'unité de réception (14) reçoit une entrée pour modifier le processus causé par celui-ci.

4. Dispositif embarqué (10) selon l'une des revendications 1 à 3,
où le processus est l'arrêt d'un déplacement du véhicule,
l'unité de commande (13) entraîne l'émission par le dispositif de sortie d'un élément ou d'une pluralité d'éléments d'informations de cause à l'origine de l'arrêt du véhicule, et,
en correspondance avec un élément, ou avec chacun des éléments de la pluralité d'informations de cause, l'unité de réception (14) reçoit une entrée pour annuler l'arrêt du véhicule causé par celui-ci.

5. Dispositif embarqué (10) selon l'une des revendications 1 à 4,
où, si une entrée pour l'annulation d'un premier processus causé par un état d'un premier objet est reçue par l'unité de réception (14) et qu'une cause du premier processus disparaît, l'unité de génération (12) génère des informations de processus pour arrêter l'exécution du premier processus.

6. Dispositif embarqué (10) selon la revendication 5, où, si un déplacement prédéterminé du premier objet est détecté par l'unité de surveillance (11) après réception par l'unité de réception (14) d'une entrée pour l'annulation du premier processus causé par un premier état du premier objet, l'unité de génération (12) génère des informations de processus pour entraîner une nouvelle exécution du premier processus par le véhicule.

7. Dispositif embarqué (10) selon l'une des revendications 1 à 4,
où, même si une entrée pour l'annulation d'un premier processus causé par l'état d'un premier objet est reçue par l'unité de réception, dans le cas où un autre état d'un objet subsiste en tant que cause du premier processus, l'unité de génération (12) génère des informations de processus pour poursuivre le premier processus.

8. Dispositif embarqué (10) selon la revendication 7, où, si un déplacement prédéterminé du premier objet est détecté par l'unité de surveillance (11) après réception par l'unité de réception (14) de l'entrée pour l'annulation du premier processus causé par l'état du premier objet, l'unité de génération (12) génère des informations de processus pour faire que l'état du premier objet redevienne la cause du premier processus.

9. Dispositif embarqué (10) selon l'une des revendications 1 à 8,
où l'unité de réception (14) reçoit une entrée pour modifier l'état de l'objet déterminé par l'unité de surveillance (11) et, sur la base de l'entrée pour modifier l'état de l'objet, l'unité de génération (12) génère des informations de processus dans lesquelles le processus est modifié.

10. Dispositif embarqué (10) selon la revendication 1, comprenant en outre :
une unité de détermination déterminant la précision de surveillance de l'unité de surveillance (11) ;
où l'unité de réception (14) arrête de recevoir une entrée pour modifier le processus si la précision de surveillance est élevée.

11. Procédé de commande exécuté par un ordinateur, ledit procédé comprenant :
une étape de surveillance de l'état d'un objet sur la base d'une sortie d'un capteur monté dans un véhicule ;
une étape de génération d'informations de processus pour entraîner l'exécution par le véhicule d'un processus en fonction de l'état ;
une étape de commande entraînant l'émission par un dispositif de sortie d'informations de cause indiquant l'objet et/ou l'état à l'origine du processus ; et
une étape de réception d'une entrée pour modifier le processus en raison de la cause indiquée par les informations de cause, et de réception d'une entrée indiquant un résultat de reconnaissance après modification pour modifier un résultat de reconnaissance de l'objet et/ou de l'état à l'origine du processus ;
où, lors de l'étape de génération, les informations de processus sont générées sur la base du résultat de reconnaissance après modification.

12. Programme, entraînant le fonctionnement d'un ordinateur comme
unité de surveillance (11) surveillant l'état d'un objet sur la base d'une sortie d'un capteur monté dans un véhicule ;
unité de génération (12) générant des informations de processus pour entraîner l'exécution par le véhicule d'un processus en fonction de l'état ;
unité de commande (13) entraînant l'émission par un dispositif de sortie d'informations de cause indiquant l'objet et/ou l'état à l'origine du processus ; et comme
unité de réception (14) recevant une entrée pour modifier le processus en raison de la cause indiquée par les informations de cause ;
où l'unité de réception (14) reçoit une entrée indiquant un résultat de reconnaissance après modification pour modifier un résultat de reconnaissance de l'objet et/ou de l'état à l'origine du processus, et
où l'unité de génération (12) génère les informations de processus sur la base du résultat de reconnaissance après modification.
